## Europäisches Patentamt
## European Patent Office
## Office européen des brevets

(19)

(11) Veröffentlichungsnummer: **0 137 152**
**B1**

(12)

# EUROPÄISCHE PATENTSCHRIFT

(45) Veröffentlichungstag der Patentschrift:
20.12.89

(51) Int. Cl.⁴: **F 02 C 3/28**, F 02 C 6/10,
F 01 K 23/06

(21) Anmeldenummer: 84108385.0

(22) Anmeldetag: 17.07.84

(54) Verfahren zum Betrieb einer mit einer Brennstoffvergasungsanlage kombinierten Gasturbineanlage.

(30) Priorität: 30.08.83 DE 3331152

(43) Veröffentlichungstag der Anmeldung:
17.04.85 Patentblatt 85/16

(45) Bekanntmachung des Hinweises auf die Patenterteilung:
20.12.89 Patentblatt 89/51

(84) Benannte Vertragsstaaten:
AT BE DE NL

(56) Entgegenhaltungen:
EP-A- 0 148 973
FR-A- 2 331 680
GB-A- 2 029 855
GB-A- 2 067 668

(73) Patentinhaber: **Asea Brown Boveri Aktiengesellschaft,
Kallstadter Strasse 1, D-6800 Mannheim-Käfertal (DE)**

(72) Erfinder: **Ceelen, Dietrich, Dr. Dipl.-Ing.,
Hochgewanne 71, D-6718 Grünstadt (DE)**
Erfinder: **Ipek, Bora, Dipl.-Ing., Schollstrasse 8,
D-6940 Weinheim (DE)**

(74) Vertreter: **Kempe, Wolfgang, Dr. et al, c/o BROWN,
BOVERI & CIE AG ZPT Postfach 351,
D-6800 Mannheim 31 (DE)**

## Beschreibung

Die Erindung betrifft ein Verfahren zum Betrieb einer mit einer Brennstoffvergasungsanlage kombinierten Gasturbinenanlage, die für die Verwendung von hochkalorischem Brenngas ausgelegt ist und eine Brennkammer aufweist, die mit Brenngas und mit in einem Luftverdichter verdichteter Luft beschickt wird, wobei ein Teil der verdichteten Luft in einer Luftzerlegungsanlage in sauerstoffarme Luft und in Sauerstoff zerlegt wird, der bei der Vergasung von festem Brennstoff unter Benutzung von Wasserdampf zur Erzeugung von mittelkalorischem Brenngas eingesetzt wird.

Eine für ein derartiges Verfahren vorgesehene Anlage ist aus der FR-A 2 331 680 bekannt geworden. Die dort beschriebene Anlage weist eine aus Verdichter, Brennkammer und Turbine gebildete Gasturbinenanlage sowie eine von einem Teil der Verdichterluft gespeiste Sauerstofferzeugungsanlage auf, die mit einem Druckgaserzeuger zusammenarbeitet. Der Druckgaserzeuger wird mit fossilem Brennstoff beschickt, welcher unter Einleitung von Sauerstoff vergast wird. Das dieserart erzeugte Brenngas wird der Brennkammer der Gasturbinenanlage zugeführt, wo es mit der Verdichterluft zu Treibgas für die Gasturbine verbrannt wird.

In der auf die eingangs angegebene Weise betriebenen Gasturbinenanlage (FR-A 2 331 680) müssen der Verdichter, die Brennkammer und die Gasturbine speziell für das anfallende Brenngas dimensioniert und entsprechend aufeinander abgestimmt sein. Es lassen sich daher keine für andere Anwendungsfälle bzw. Gase konzipierte und meist auch serienmäßig lieferbare Luftverdichter, Brennkammern und Gasturbinen einsetzen, wodurch der Aufwand für ein solches Verfahren beträchtlich erhöht ist.

Hinzu kommt noch daß für die Luftzufuhr zur Luftzerlegungsanlage ein besonderer Zusatzverdichter erforderlich ist, der den Aufwand weiter steigert.

Aufgabe der Erfindung ist es daher, ein Betriebsverfahren für eine Gasturbinenanlage, insbesondere mit nachgeschalteten Dampfkraftwerk, der eingangs genannten Art anzugeben, das mit geringem Aufwand, insbesondere bezüglich der Verdichter, der Brennkammer und der Gasturbine, durchgeführt werden kann. Darüber hinaus soll das Verfahren einen günstigen Wirkungsgrad aufweisen.

Die Lösung der Aufgabe besteht in einem Verfahren zum Betrieb einer mit einer Brennstoffvergasungsanlage kombinierten Gasturbinenanlage, die für die Verwendung von hochkalorischem Brenngas mit einem Heizwert von 30 bis 50 MJ/kg ausgelegt ist und eine Brennkammer aufweist, die mit Brenngas und mit in einem Luftverdichter verdichteter Luft beschickt wird, wobei ein Teil, vorzugsweise 8 bis 12 Gew.-%, der verdichteten Luft in einer Luftzerlegungsanlage in sauerstoffarme Luft und in Sauerstoff zerlegt wird, der bei der Vergasung zur Erzeugung von mittelkalorischem Brenngas mit einem Heizwert von 10 bis 16 MJ/kg eingesetzt wird, welches nach der anschließenden Reinigung in einem Gasreiniger und nach Beimischung der sauerstoffarmen Luft zur Erhöhung des Massenstroms zur Verbesserung des Gesamtwirkungsgrades der Anlage vor der Verfeuerung durch die vom Luftverdichter zur Luftzerlegungsanlage strömende Luft vorgewärmt, als niederkalorisches Brenngas mit einem Heizwert von 3 bis 7 MJ/kg der Brennkammer der Gasturbinenanlage zugeführt wird und nach Reaktion mit der vom Luftverdichter zugeführten verdichteten Luft die Gasturbine durchströmt und einen Abhitzekessel zur Erzeugung von Wasserdampf beaufschlagt, der einesteils zur Versorgung der Brennstoffvergasungsanlage und anderenteils zum Betrieb einer Dampfturbine genutzt wird.

Hierdurch ist es möglich, die Gasturbinenanlage, vorzugsweise einwellig mit einem Luftverdichter, einer Brennkammer und einer Gasturbine zu betreiben, die eigentlich für den Betrieb mit einem hochkalorischen Gas (Gas mit hohem Heizwert), z.B. Erdgas, eingerichtet sind. Da bei der erfindungsgemäßen Betriebsweise die für die Brennkammer zur Verfügung stehende Luft um jene Luft, welcher der Luftzerlegungsanlage zugeführt wird, verringert ist, könnte in der Brennkammer lediglich ein entsprechend geringerer Massenstrom durchgesetzt werden mit der Folge eines zu geringen und daher zu Leistungsverlusten führenden Treibgasangebotes an die Gasturbine. Dies wird jedoch dadurch vermieden, daß die in der Luftzerlegunganlage anfallende sauerstoffarme Luft dem Brenngas vor seiner Verfeuerung beigemischt und somit dieses Gasdefizit ausgeglichen wird. Es steht daher ein Brenngas bzw. Treibgas mt ausreichendem Massenstrom zur Verfügung, so daß der Betrieb der Gasturbinenanlage zumindest ungefähr mit jenen Daten möglich ist, für welche die Gasturbinenanlage ausgelegt ist. Durch das erfindungsgemäße Betriebsverfahren lassen sich somit auf einfache Weise für den Betrieb mit hochkalorischen Brenngas bestimmte Gasturbinenanlagen einsetzen, eine besondere Dimensionierung und Herstellung für den kombinierten Gasturbinen-Brennstoffvergasungsprozeß ist, ggf. außer einer Anpassung des eigentlichen Brenners der Brennkammer, nicht erforderlich, wobei der Einsatz des Luftverdichters der Gasturbinenanlage zur Luftversorgung der Luftzerlegungsanlage zu einer weiteren Vereinfachung und Verringerung des Aufwandes führt.

Um den Gesamtwirkungsgrad der Anlage zu verbessern, wird das Brenngasluftgemisch vor der Verfeuerung durch die vom Luftverdichter zur Luftzerlegungsanlage strömende Luft vorgewärmt. In die gleiche Richtung zielt eine andere, ebenso günstige Maßnahme, wonach das aus der Brennstoffvergasungsanlage kommende Brenngas durch die vom Luftverdichter zur Luftzerlegungsanlage strömende Luft vorgewärmt wird. Da sich hierbei die durch die Verdichtung erhitzte Luft abkühlt, ist gleichzeitig eine Möglichkeit geschaffen, der Luftzerlegungsanlage Luft mit geeigneter Temperatur zuzuführen.

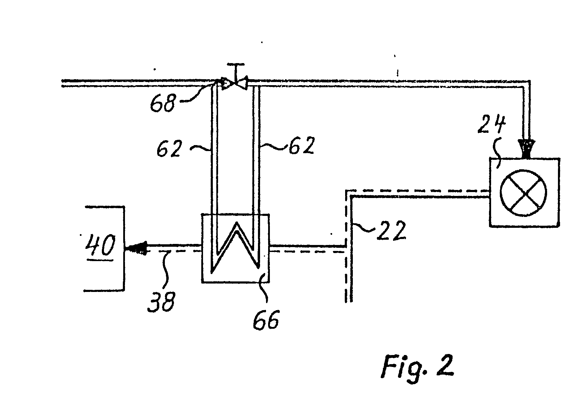

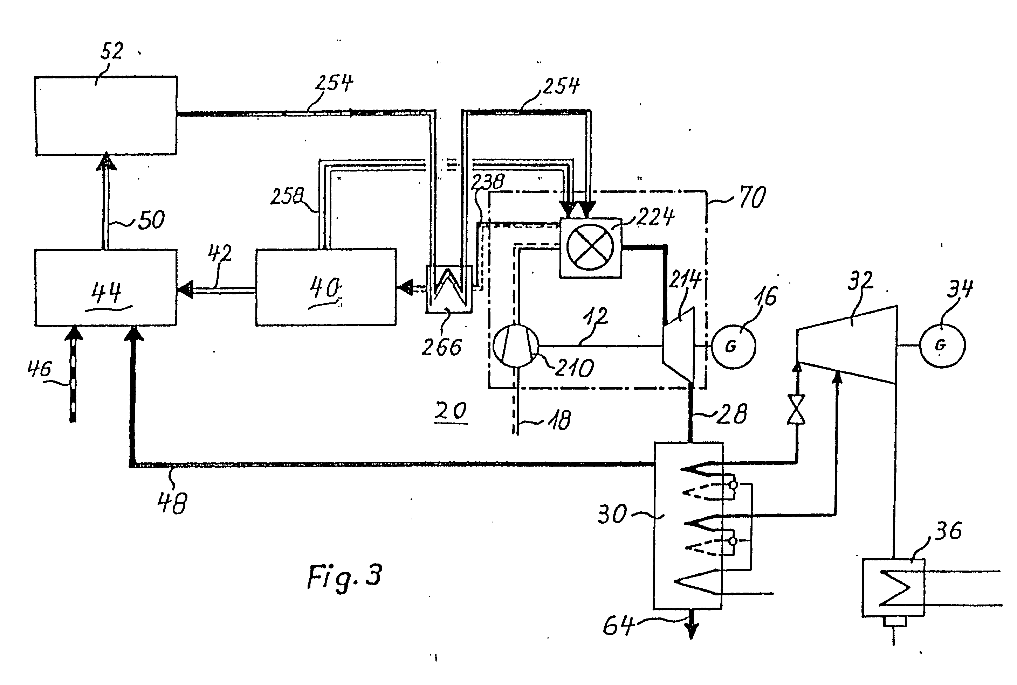

Weitere Vorteile der Erfindung gehen aus der folgenden beispielsweisen Beschreibung von Gasturbinenanlagen hervor, die jeweils mit einem Dampfkraftwerk zu einem Gasturbinenkraftwerk kombiniert sind, und wobei die zu den Figuren 2 und 3 gehörenden Anlagen für die Durchführung des erfindungsgemäßen Verfahrens geeignet sind.

Hierbei zeigen:

Figur 1 das Schaltschema eines mit einer Brennstoffvergasungsanlage kombinierten Gasturbinenkraftwerks,

Figur 2 die Einzelheit II der Figur 1 in einer geänderten Ausführungsvariante und

Figur 3 eine geänderte Ausführung des Gegenstandes der Figur 1.

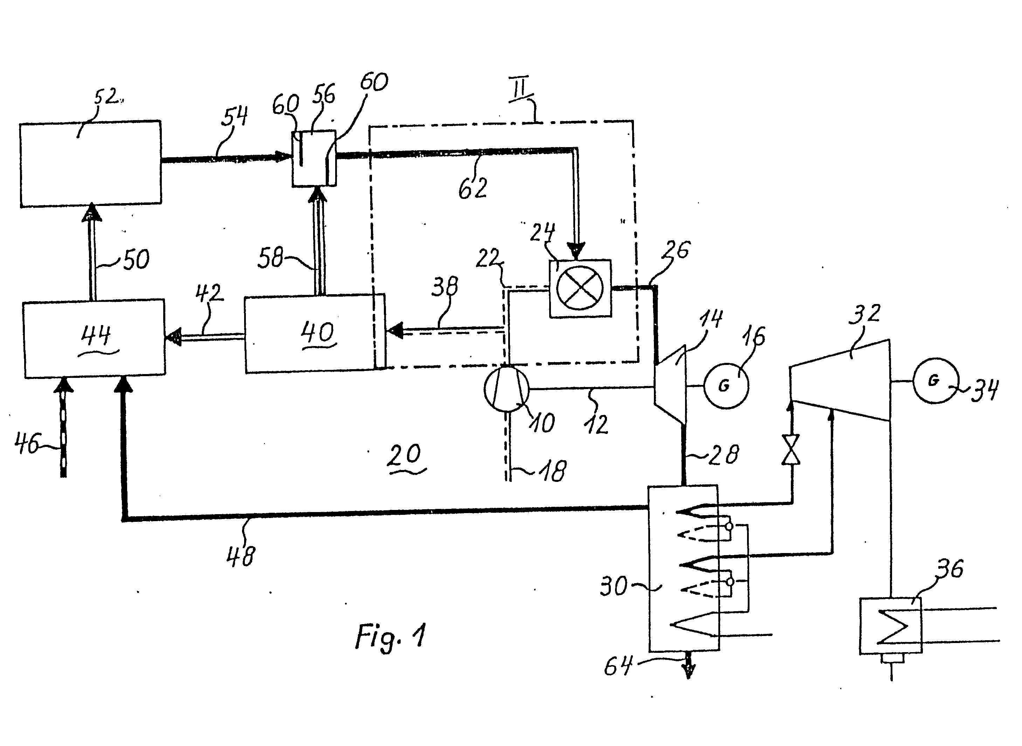

Die in Figur 1 dargestellte, mit einer Brennstoffvergasungsanlage vereinte und zu einem Gasturbinenkraftwerk kombinierte einwellige Gasturbinenanlage weist einen Luftverdichter 10 auf, der durch eine Welle 12 mit der Gasturbine 14 und einem elektrischen Generator 16 gekuppelt ist. Der Luftverdichter 10 ist mit einer Ansaugleitung 18 versehen, die in den Außenraum 20 mündet, wogegen die Druckleitung 22 zur Brennkammer 24 führt. Der Ausgang der Brennkammer ist durch die Treibgasleitung 26 mit der Gasturbine 14 verbunden, an die wiederum durch eine Abgasleitung 28 ein Abhitzedampfkessel 30 angeschlossen ist. Dieser Abhitzedampfkessel 30 versorgt eine mit einem zweiten elektrischen Generator 34 gekuppelte Dampfturbine 32 mit Treibdampf. Um die Restwärme aus dem Dampfturbinenprozeß abführen zu können, ist noch ein Dampfkondensator 36 an den Ausgang der Dampfturbine 32 angeschlossen.

Der Verdichter, die Brennkammer und die Gasturbine sind serienmäßig hergestellt und bezüglich ihrer Dimensionierung für den Betrieb mit einem hochkalorischen Brenngas abgestimmt, wobei unter hochkalorischem Brenngas ein Brenngas mit einem Heizwert von 30 000 bis 50 000 kJ/kg verstanden sein soll. Verdichter, Brennkammer und Gasturbine sind im vorliegenden Ausführungbeispiel als getrennte Bauteile ausgeführt und Bestandteil der Gasturbinenanlage.

Von der Druckleitung 22 ist die Luftleitung 38 abgezweigt, die zur Luftzerlegungsanlage 40 führt, welche die zugeführte Luft in Sauerstoff und sauerstoffarme Luft zerlegt. Unter sauerstoffarmer Luft ist hierbei Luft zu verstehen, deren Stickstoffanteil mindestens 90 Vol.% beträgt. Zur Einstellung des zur Luftzerlegungsanlage fließenden Massenstromes kann in der Luftleitung 38 ein Regulierventil oder am Abzweig ein Verteilventil in der Druckleitung 22 vorgesehen sein. Der in der Luftzerlegungsanlage gewonnene Sauerstoff wird durch die Sauerstoffleitung 42 der Brennstoffvergasungsanlage 44 zugeleitet, der gleichzeitig fester Brennstoff, z.B. Kohle, durch eine angedeutete Fördereinrichtung 46 zugeführt werden kann. Da für die Brennstoffvergasung Wasserdampf benötigt wird, ist noch eine Dampfleitung 48 vorgesehen, welche die Brennstoffvergasungsanlage 44 mit dem Abhitzedampfkessel 30 verbindet. Gegebenenfalls kann der Luftzerlegungsanlage 40 Zusatzluft durch einen nicht dargestellten zusätzlichen Verdichter zugeführt werden. Dies ist auch für das Anfahren der Anlage notwendig.

Das in der Brennstoffvergasungsanlage erzeugte Brenngas strömt durch eine Gasleitung 50 einem Gasreiniger 52 zu, so daß durch dessen Ausgangsleitung 54 gereinigtes Brenngas, d.h. mittelkalorisches Synthesegas mit einem Heizwert von ungefähr 10 000 bis 16 000 kJ/kg entnommen werden kann. Der Aufbau und die Funktionsweise der Luftzerlegungsanlage, der Brennstoffvergasungsanlage und des Gasreinigers sind durch den Stand der Technik bekannt, so daß sich hier nähere Ausführungen erübrigen. Die Ausgangsleitung 54 führt zu einem Gasmischer 56, dem jene sauerstoffarme Luft, die in der Luftzerlegungsanlage 40 anfällt, durch eine Leitung zugeführt wird, die im vorliegenden Fall als Stickstoffleitung 58 bezeichnet wird. Im Innenraum des Gasmischers sind wenigstens zwei gegeneinander ausgerichtete Leitbleche 60 vorgesehen, die für eine gute Durchmischung des durch die Ausgangsleitung 54 zugeführten Brenngases mit der durch die Stickstoffleitung 58 von der Luftzerlegungsanlage 40 zuströmenden sauerstoffarmen Luft bewirken. Schließlich führt vom Ausgang des Gasmischers 56 eine Brenngasleitung 62 zur Brennkammer 24. Gegebenenfalls kann die Stickstoffleitung 58 mit einem Ventil oder Verteilventil ausgerüstet sein, wenn ein Teil der sauerstoffarmen Luft nicht dem Gasmischer 60 zugeführt werden soll. In diesem Fall kann die unter Überdruck stehende abgezweigte sauerstoffarme Luft in einer Entspannungsturbine ausgenutzt werden oder ins Freie abgeblasen werden.

Während des Betriebs wird vom Luftverdichter 10 Luft aus dem Außenraum 20 durch die Ansaugleitung angesaugt, verdichtet und in die Druckleitung 22 abgegeben, durch die diese der Brennkammer 24 zuströmen kann. Gleichzeitig wird ein Teil der verdichteten Luft, ca. 5 bis 20 Gew.%, vorzugsweise 8 bis 12 Gew.% durch die Luftleitung 38 zur Luftzerlegungsanlage 40 geleitet und in Sauerstoff sowie sauerstoffarme Luft, die im wesentlichen Stickstoff enthält, zerlegt. Die sauerstoffarme Luft wird durch die Stickstoffleitung 58 zum Gasmischer 56 geleitet, wogegen der Sauerstoff durch die Sauerstoffleitung 42 der Brennstoffvergasungsanlage 44 zuströmt. Hier wird Kohle, die durch die Fördereinrichtung 46 eingebracht wird, mit Hilfe des zugeführten Sauerstoffes vergast. Das entstandene mittelkalorische Brenngas strömt durch die Gasleitung 50, den Gasreiniger 52 sowie die Ausgangsleitung 54 zum Gasmischer 56.

Im Gasmischer 56 wird das zugeführte mittelkalorische Brenngas mit sauerstoffarmer Luft, die als Abfallprodukt in der Luftzerlegungsanlage 40 anfällt, innig gemischt. Hierdurch entsteht aus dem mittelkalorischen Brenngas ein niederkalorisches Brenngas mit einem Heizwert von ungefähr 3000 bis 7000 kJ/kg, das hier auch als Brenngas-Luftgemisch bezeichnet wird. Dieses niederkalori-

sche Brenngas wird dann durch die Brenngasleitung 62 der Brennkammer 24 zugeführt und mit Hilfe der durch die Druckleitung 22 eingeleiteten Luft verfeuert. Vorzugsweise wird die gesamte anfallende sauerstoffarme Luft dem Brenngas beigemischt, mindestens jedoch 50 Gew.%, wobei der Rest z.B. in der Luftzerlegungsanlage zur Erzeugung mechanischer Antriebsleistung genutzt wird.

Die in der Brennkammer 24 gebildeten Treibgase strömen dann durch die Treibgasleitung 26 zur Gasturbine 14, werden dort entspannt, und strömen anschließend durch die Abgasleitung 28 in den Abhitzedampfkessel 30 ab. Hier wird Dampf erzeugt, der hauptsächlich für den Antrieb der Dampfturbine 32 benutzt wird, so daß im zweiten Generator 34 elektrische Energie erzeugt wird. Weitere elektrische Energie wird vom Generator 16 geliefert, der von der Gasturbine 14 angetrieben ist. Ein Teil des Dampfes wird vom Dampferzeuger 30 durch die Dampfleitung 48 der Brennstoffvergasungsanlage 44 zugeleitet und für die Vergasung des Brennstoffes ausgenutzt.

Der Abdampf der Dampfturbine 32 wird im Dampfkondensator 36 durch ein Kühlmittel niedergeschlagen und das anfallende Kondensat dem Dampfkreislauf in bekannter Weise wieder zugeführt. Die Abgase des Kraftwerkes werden durch eine Leitung 64 einem Schornstein zugeführt.

Aus der vorbeschriebenen Betriebsweise des mit einer Brennstoffvergasungsanlage kombinierten Gasturbinen-Kraftwerks erkennt man, daß es durch das Vorgehen auf sehr einfache Weise möglich ist, eine Gasturbinenanlage einzusetzen, die für den Betrieb mit einem hochkalorischen Brenngas dimensioniert und serienmäßig lieferbar ist, so daß die Kosten gering sind.

Fig. 2 zeigt die Einzelheit II der Fig. 1 in einer geänderten Ausführung. Hier ist in die Luftleitung 38 die Sekundärseite eines Oberflächen-Wärmetauschers 66 eingeschaltet, dessen Primärseite in die Brenngasleitung 63 eingefügt ist. Da die vom Luftverdichter 10 kommende und durch die Luftleitung 38 zugeführte Luft durch den Verdichtungsvorgang erhitzt ist, wird eine Vorwärmung des niederkalorischen Brenngases vor seinem Eintritt in die Brennkammer 34 erreicht und somit dessen Verbrennung verbessert. Gleichzeitig wird die Temperatur der Luft, welche der Luftzerlegungsanlage 40 zuströmt, verringert und auf eine für den Betrieb der Luftzerlegungsanlage geeigneten Wert gebracht. Eine Regelung der Vorwärmtemperatur ist durch einen einstellbaren Bypaß 68 in Form eines Regulierventiles möglich, mit dem die Durchströmung des Oberflächen-Wärmetauschers 66 durch das niederkalorische Brenngas beeinflußt werden kann.

Fig. 3 zeigt eine geänderte Ausführung des in Fig. 1 gezeigten Gasturbinen-Kraftwerks. Gegenüber dem Gasturbinen-Kraftwerk gemäß Fig. 1 bestehen im wesentlichen drei Unterschiede.

Der eine Unterschied besteht darin, daß der Luftverdichter 210, die Brennkammer 224 und die Gasturbine 214 der Gasturbinenanlage als eine Baueinheit in Form eines Gasturbosatzes zusammengefaßt sind. Dies ist durch den gestrichelten Rahmen 70 angedeutet, der in Fig. 3 die vorgenannten Bauteile umgibt. Da durch den Zusammenbau der vorgenannten Bauteile die Brennkammer 224 unmittelbar mit dem Luftverdichter 210 und der Gasturbine 214 verbunden ist, und somit gesonderte Verbindungsleitungen entfallen, ist die Luftleitung 238, welche zur Luftzerlegungsanlage 40 führt, an einem luftführenden Bereich der Brennkammer 224 angeschlosen. Der Luftverdichter 210 fördert also direkt in die Brennkammer 224, und der für die Luftzerlegung erforderliche Anteil Luft wird einem luftführenden Bereich der Brennkammer entnommen. Der zweite Unterschied gegenüber Fig. 1 ist darin zu sehen, daß die Mischung von sauerstoffarmer Luft und Gas nicht in einem Gasmischer, sondern unmittelbar in der Brennkammer 224 erfolgt. Hierzu ist die von der Luftzerlegungsanlage ausgehende Stickstoffleitung 258 unmittelbar an die Brennkammer angeschlossen, ebenso die Ausgangsleitung 254, durch welche das Brenngas der Brennkammer 224 vom Gasreiniger 52 zugeleitet wird. Die Mischung von mittelkalorischem Gas und sauerstoffarmer Luft zu niederkalorischem Brenngas beziehungsweise Brenngas-Luftgemisch erfolgt jetzt unmittelbar vor der Verbrennung in der Brennkammer 224. Schließlich ist gegenüber Fig. 1 noch ein Unterschied bezüglich der Vorwärmung des Brenngases vorhanden. Im .Ausführungsbeispiel gemäß Fig. 3 ist der in die Luftleitung 238 eingefügte Oberflächen-Wärmetauscher 266 primärseitig in die Ausgangsleitung 254 eingefügt, so daß jetzt das Brenngas vor seiner Vermichung mit der sauerstoffarmen Luft vorgewärmt wird.

Zur Beeinflussung der Massenströme können auch hier, genau wie im Ausführungsbeispiel nach Fig. 1, Ventile bzw. Verteilventile in der Luftleitung 238 und/oder in der Stickstoffleitung 258 vorgesehen sein.

Der Betrieb der Anlage gemäß Fig. 3 entspricht dem der Anlage gemäß Figl. 1, so daß hier weitere Ausführungen nicht erforderlich sind.

Insbesondere bei einem Gasturbinen-Kraftwerk mit einer zu einer Baueinheit zusammengefaßten Gasturbogruppe zeigt sich der Vorteil der erfindungsgemäßen Betriebsweise sehr deutlich. Da der Luftverdichter 210, die Brennkammer 224 und die Gasturbine 214 einer solchen Gasturbogruppe bezüglich der Luftförderung und des Gasdurchsatzes für den Betrieb mit einem hochkalorischen Brenngas abgestimmt sind, ist es bei der bestimmungsgemäßen Betriebsweise nicht möglich, einen Teil der vom Luftverdichter 210 geförderten Luft für andere Zwecke abzuzweigen. Denn diese abgezweigte Luft würde im Gasturbinen-Prozeß fehlen und das Treibgasangebot an die Gasturbine verringern. Da jedoch durch das erfindungsgemäße Verfahren die abgezweigte und der Luftzerlegungsanlage 40 zugeführte Luft durch der Brennkammer 224 zugeführte sauerstoffarme Luft ersetzt wird, ist ein Betrieb der Gasturbogruppe mit einem Durchsatz von Luft bzw. Gas oder Brenngas möglich, der den Auslegungsdaten entspricht.

Es leuchtet ein, daß die Gasvorwärmung im Oberflächen-Wärmetauscher 266 gemäß der Ausführungsvariante der Fig. 3 nicht an den Einsatz einer Gasturbogruppe gekoppelt ist, sie kann vielmehr auch bei einer Ausführungsform des Gasturbinen-Kraftwerks gemäß Fig. 1 Verwendung finden. Auch ist noch zu bemerken, daß bei der mit niedriger Temperatur verlaufenden Verbrennung des niederkalorischen Gases als Nebeneffekt nur sehr geringe und meist unbedenkliche Mengen von Schadstoffen entstehen.

Selbstverständlich kann die Gasturbinenanlage auch mehrere Luftverdichter, Brennkammern und Gasturbinen aufweisen, im Vorstehenden wurde lediglich aus terminologischen Gründen im Singular formuliert.

## Patentanspruch

Verfahren zum Betrieb einer mit einer Brennstoffvergasungsanlage (44) kombinierten Gasturbinenanlage, die für die Verwendung von hochkalorischem Brenngas mit einem Heizwert von 30 bis 50 MJ/kg ausgelegt ist und eine Brennkammer (24) aufweist, die mit Brenngas und mit in einem Luftverdichter (10) verdichteter Luft beschickt wird, wobei ein Teil, vorzugsweise 8 bis 12 Gew.-%, der verdichteten Luft in einer Luftzerlegungsanlage (40) in sauerstoffarme Luft und in Sauerstoff zerlegt wird, der bei der Vergasung von festem Brennstoff unter Benutzung von Wasserdampf zur Erzeugung von mittelkalorischem Brenngas mit einem Heizwert von 10 bis 16 MJ/kg eingesetzt wird, welches nach der anschließenden Reinigung in einem Gasreiniger (52) und nach Beimischung der sauerstoffarmen Luft zur Erhöhung des Massenstroms zur Verbesserung des Gesamtwirkungsgrades der Anlage vor der Verfeuerung durch die vom Luftverdichter (10) zur Luftzerlegungsanlage (40) strömende Luft vorgewärmt, als niederkalorisches Brenngas mit einem Heizwert von 3 bis 7 MJ/kg der Brennkammer (24) der Gasturbinenanlage zugeführt wird und nach Reaktion mit der vom Luftverdichter (10) zugeführten verdichteten Luft die Gasturbine (14) durchströmt und einen Abhitzekessel (30) zur Erzeugung von Wasserdampf beaufschlagt, der einesteils zur Versorgung der Brennstoffvergasungsanlage (44) und anderenteils zum Betrieb einer Dampfturbine (32) genutzt wird.

## Claim

Method of operating a gas turbine installation combined with a fuel vaporization installation (44) which is designed for the use of high-calorie fuel gas having a calorific value of 30 to 50 MJ/kg and exhibits a combustion chamber (24) which is fed with fuel gas and with air compressed in an air compressor (10), a part, preferably 8 to 12% by weight, of the compressed air being separated in an air separation installation (40) into oxygen-poor air and oxygen which is used in the vaporization of solid fuel using steam to generate medium-calorie fuel gas having a calorific value of 10 to 16 MJ/kg which, after the subsequent purification in a gas purifier (52) and after admixture of the oxygen-poor air to increase the mass flow in order to improve the overall efficiency of the installation, is perheated before firing by the air flowing from the air compressor (10) to the air separation installation (40), is fed as a low-calorie fuel gas having a calorific value of 3 to 7 MJ/kg to the combustion chamber (24) of the gas turbine installation, and after reacting with the compressed air supplied by the air compressor (10), flows through the gas turbine (14) and is admitted to a waste heat boiler (30) to generate steam which is utilized as to one part to supply the fuel vaporization installation (44) and as to the other part to operate a steam turbine (32).

## Revendication

Procédé de mise en œuvre d'une installation à turbine à gaz qui est combinée à une installation de gazéification de combustible (44), et est conçue pour l'utilisation de gaz combustible hautement calorifique présentant une puissance calorifique de 30 à 50 MJ/kg et qui présente une chambre de combustion (24) chargée de gaz combustible et d'air comprimé dans un compresseur d'air (10), procédé dans lequel une partie, de préférence 8 à 12% en poids, de l'air comprimé est séparé, dans une installation de séparation d'air (40), en air pauvre en oxygène et en oxygène qui est mis en œuvre lors de la gazéification du combustible solide avec utilisation de vapeur d'eau pour la production de gaz combustible moyennement calorifique, qui présente une puissance calorifique de 10 à 16 MJ/kg et qui, après la purification ultérieure dans un épurateur de gaz (52) et après addition de l'air pauvre en oxygène pour augmenter le débit massique en vue d'améliorer le rendement global de l'installation est préchauffé, avant d'être brûlé par l'air passant du compresseur d'air (10) à l'installation de séparation d'air (40), et, est amené à la chambre de combustion (24) de l'installation à turbine à gaz sous la forme d'un gaz combustible faiblement calorifique présentant une puissance calorifique de 3 à 7 MJ/kg, et, qui traverse la turbine à gaz (14) après avoir réagi avec l'air comprimé amené à partir du compresseur d'air (10) et alimente une chaudière de récupération (30) qui est destinée à la production de vapeur d'eau et est utilisée d'une part pour l'alimentation de l'installation de gazéification du combustible (44) et d'autre part pour le service d'une turbine à vapeur (32).

Fig. 1

EP 0 137 152 B1

*Fig. 2*

Fig. 3

EP 0 137 152 B1